# EUROPEAN PATENT SPECIFICATION

(11) **EP 3 465 553 B1**
(45) Date of publication and mention of the grant of the patent: **05.01.2022**
(21) Application number: 17768279.6
(22) Date of filing: 25.08.2017
(51) Int. Cl.: G06N 5/02, H04L 29/06

(54) **A COGNITIVE AUTOMATION ENGINEERING SYSTEM**
EIN KOGNITIVES AUTOMATISIERUNGSSYSTEM
UN SYSTÈME D'INGÉNIERIE DE L'AUTOMATISATION COGNITIVE

(43) Date of publication of application: 10.04.2019
(73) Proprietor: Siemens Aktiengesellschaft, 80333 München (DE)
(72) Inventor: MARTINEZ CANEDO, Arquimedes, Plainsboro, New Jersey 08536 (US); MUENZEL, Georg, Plainsboro, New Jersey 08536 (US); QUIROS ARAYA, Gustavo, Princeton, New Jersey 08540 (US)
(74) Representative: Isarpatent
(86) International application number: PCT/US2017/048524
(87) International publication number: WO 2019/040076

(56) References cited:
- EP-A1- 3 118 697
- US-A1- 2003 084 379
- US-A1- 2010 318 396
- QUIROS GUSTAVO ET AL: "Dispersed automation for industrial Internet of Things - An enabler for advanced manufacturing", 2017 13TH IEEE CONFERENCE ON AUTOMATION SCIENCE AND ENGINEERING (CASE), IEEE, 20 August 2017 (2017-08-20), pages 269-274, XP033299254, DOI: 10.1109/COASE.2017.8256113 [retrieved on 2018-01-12]
- LEITAO ET AL: "Agent-based distributed manufacturing control: A state-of-the-art survey", ENGINEERING APPLICATIONS OF ARTIFICIAL INTELLIGENCE, PINERIDGE PRESS, SWANSEA, GB, vol. 22, no. 7, 1 October 2009 (2009-10-01), pages 979-991, XP026602737, ISSN: 0952-1976, DOI: 10.1016/J.ENGAPPAI.2008.09.005 [retrieved on 2008-11-17]

## Description

### TECHNICAL FIELD

The present invention relates generally to systems and methods that integrate cognitive processes into the management of physical automated systems.

### BACKGROUND

Automation engineering systems are used for configuring, programming and commissioning automation systems comprising programmable logic controllers (PLCs), drives, human-machine interface (HMI) systems, distributed I/O, etc. Performing automation engineering tasks require a high level of technical expertise due to the complexity and criticality of modern automation systems, as well as domain expertise due to the specialty of the application areas when developing automation solutions (e.g., manufacturing and assembly, chemical, pharmaceutical, food and beverage, paper, electronics, etc.).

The growing complexity of automated systems, the increasing requirements for high productivity and quality of the engineering tasks as well as for the efficiency and safety of the automation solutions, produce a demand of automation engineers that is increasingly difficult to satisfy. Additionally, teams of automation engineers are faced with increasingly complex challenges that incur in higher costs and greater risks for providing the required levels of reliability, efficiency, and safety.

Traditional automation engineering, as described above, relies on the expertise of engineering teams. Engineering systems provide graphical user interfaces and support functions that assist engineers with their tasks, for example, by automating simple repetitive tasks, performing automatic conversion between different file formats, allowing comfortable editing of designs and programs through intuitive graphical user interfaces, performing validation and cross-checking of configurations, programs and designs, offering wizards that guide the engineer step-by-step, etc. Each of these features reduce the effort needed for performing engineering tasks, but do not reduce the requirement for expert users nor the responsibility of these users for developing correct automation solutions for increasingly complex systems. The patent application EP 3 118 697 Al, 2017-01-18, describes a computer-implemented method for integrating cognitive processes into the management of physical automated systems for generating a deployment for a physical automated system based on system knowledge comprising: receiving user inputs comprising records of human-computer interactions; extracting knowledge data from the user inputs; generating a knowledge representation comprising facts and rules related to the physical automated system based at least in part of the knowledge data; using an automated reasoning engine to generate a set of actions executable by an automation engineering system based on the knowledge representation; generating an automated system deployment based at least in part on the set of actions; implementing the automated system deployment on the automated system; and using the automated reasoning engine to generate and provide a feedback to a user to enable refinement of the user inputs for future generation of deployment for the physical automated system; and wherein the knowledge representation is generated by applying one or more machines learning models to the knowledge data to generate the facts and rules related to the automated system, and by applying an inductive programming model to generate one or more rules based on the knowledge data; generating executable code based on the one or more rules; and using the executable code to generate the facts and rules related to the automated system. QUIROS GUSTAVO ET AL, "Dispersed automation for industrial Internet of Things - An enabler for advanced manufacturing", 2017 13TH IEEE CONFERENCE ON AUTOMATION SCIENCE AND ENGINEERING (CASE), IEEE, 20 August 2017 describes automation for reprogramming industrial Internet of Things devices employing engineering knowledge about the device and is integrating cognitive processes into the management of physical automated systems for generating a deployment a physical automated system based on system knowledge.

### SUMMARY

Embodiments of the present invention address and overcome one or more of the above shortcomings and drawbacks, by providing systems and methods related to a cognitive automation engineering system that may be used to control physical automated systems based on system knowledge. Cognitive systems are the result of many years of research and are now being integrated into commercial systems. By leveraging cognitive technologies, CAES can effectively transform the automation engineering discipline. For instance, an engineer can concentrate on higher level tasks and delegate configuration and programming tasks to CAES, thereby doing the work of an entire team of engineers. Apart from an increase in productivity, the automation of the cognitive processes behind engineering can improve the quality of the engineering work, producing more efficient and safer automation solutions.

According to some embodiments, a computer-implemented method for generating a deployment for an automated system based on system knowledge includes receiving user inputs comprising engineering documents and records of human-computer interactions. The exact technique for receiving the inputs depends on the type and content of the inputs. For example, where the engineering documents comprise one or more of e-mails, manuals, and webpages, the engineering documents may be retrieved from one or more databases. As an additional example, human-computer interactions with at least one human-machine interface in the automated system may be monitored to generate the records of human-computer interactions. Once the user inputs are received, knowledge data is extracted from them. A knowledge representation is generated based at least in part of the knowledge data. This knowledge representation comprises facts and rules related to the automated system. An automated reasoning engine is used to generate a set of actions executable by an automation engineering system based on the knowledge representation. An automated system deployment is generated based at least in part on the set of actions and the automated system deployment is implemented on the automated system.

Additions, refinements, or other modifications may be made to the aforementioned method in different embodiments of the present invention. For example, in some embodiments, a natural language processing model is applied to the user inputs to extract the knowledge data. In other embodiments, the knowledge data is extracted from the user inputs based at least in part on a user's manual identification of at least a portion of the knowledge data. In other embodiments, the knowledge representation described above is generated by applying one or more machines learning models to the knowledge data to generate the facts and rules related to the automated system.

Additionally, in other embodiments of the present invention, the knowledge representation is generated by applying an inductive programming model to generate one or more rules based on the knowledge data, generating executable code based on the one or more rules, and then using the executable code to generate the facts and rules related to the automated system. In some embodiments, pre-generated facts and rules related to the automated system are received. Then, prior to using the automated reasoning engine to generate the set of actions, the pre-generated facts and rules may be aggregated with the knowledge representation. In other embodiments, the automated reasoning engine is used to generate a suggested modification to automated system design parameters. Then, the suggested modification is transmitted to one or more engineers.

According to another aspect of the present invention, a system for generating a deployment for an automated system based on system knowledge includes a cognitive system. This cognitive system includes a user interface module configured to receive user inputs comprising engineering documents and records of human-computer interactions. The cognitive system further includes a knowledge extraction component and a knowledge representation component. The knowledge extraction component is configured to extract knowledge data from the user inputs. The knowledge representation component is configured to generate a knowledge representation from the data comprising facts and rules related to the automated system. The cognitive system further includes an automated reasoning engine. This automated reasoning engine is configured to generate a set of actions executable by an automation engineering system based on the knowledge representation. Aside from the cognitive system the aforementioned system includes an automation engineering system configured to generate an automated system deployment based at least in part on the set of actions, and implements the automated system deployment on the automated system.

In some embodiments, the aforementioned system further includes a plurality of engineering stations. Each engineering station executes an instance of the cognitive system and an instance of the automation engineering system. Each instance of the cognitive system may share the knowledge data locally extracted at the engineering station with instances of the cognitive system executed on other engineering systems. Alternatively (or additionally), the system may include a server computing system that executes an instance of the cognitive system and an instance of the automation engineering system. This server computing system may be configured to provide multiple users with simultaneous access to the cognitive system and the automation engineering system.

A system for performing cognitive tasks related to an automation system in a dispersed manner may include a plurality of computing devices. Each computing device includes a real-time execution system that generates input/output signals for controlling a physical system, and a cognitive system. The cognitive system is configured to extract knowledge data from records of human-computer interaction and acquire additional knowledge data from one or more other computing devices included in the plurality of computing devices. Each computing device also generates a knowledge representation comprising facts and rules related to the physical system based at least in part of the knowledge data and the additional knowledge data. Additionally, each computing device uses an automated reasoning engine to generate a set of actions for reconfiguring the real-time execution system based on the knowledge representation, and executes the set of actions. The system further may include a real-time communication network connecting the plurality of computing devices and used to acquire the knowledge data from the other computing devices.

Various additions, refinements, or other modifications may be made to the aforementioned system in different embodiments. For example, reconfiguration of the real-time execution system comprises providing executable instructions to one or more of a real-time scheduler and a resource manager included in the real-time execution system. The records of human-computer interaction may comprise one or more of parameter values, operation goals, commands, operational constraints, and priorities related to the physical system. The additional knowledge data may comprise an identification of a cyber-attack on the other computing devices. Then, the cognitive system may be further configured to determine that a particular computing device included in the other computing devices has been compromised by a cyber-attacked based on the additional knowledge data received from the particular computing device. A new set of actions can be generated for reconfiguring the real-time execution system on the compromised device based on the knowledge representation.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention are best understood from the following detailed description when read in connection with the accompanying drawings. Included in the drawings are the following Figures:
FIG. 1 provides a system diagram for implementing a CAES;
FIG. 2 provides a computer-implemented method for generating a deployment for an automated system based on system knowledge;
FIG. 3 provides an illustration of how a CAES can be connected to other cognitive systems to form a distributed cognitive automation system.

### DETAILED DESCRIPTION

The following disclosure describes the present invention according to several embodiments directed at methods and systems related to a Cognitive Automation Engineering System (CAES). The CAES comprises an Automation Engineering System (AES) that is augmented with a Cognitive System (CS). By incorporating the functionality of an AES, the CAES offers the conventional engineering functionality to engineers. Additionally, the CS acts as a "cyber-engineer" that can think, decide and act on its own, interacting with the human engineers and allowing them - in conjunction with the CAES - to perform automation workloads that would not be possible by the human engineers alone.

Modern-day cognitive systems such as IBM's Watson, are making their way into a multitude of application domains, and showing convincing results that further drive their adoption. For instance, medical diagnosis is gaining from vast data sets collected over the course of many years and across many different populations that can be used by cognitive systems in order to achieve accurate detection of diseases and health problems, as well as to predict future illnesses. Customer service systems are employing cognitive systems to offer effective automated support to customers over the phone, and online marketing applications - e.g. from Amazon - are based nowadays on cognitive systems and can provide suggestions to shoppers that closely match their interests.

The CAES discussed herein differs from existing cognitive systems such as IBM Watson^{™} in a variety of ways. For example, the CS is tailored to augment an engineering system. Thus, the CAES comprise a complete automation engineering system with all of its functionality: engineering object management, hardware and software component database, programming language models and compilers, communication components, etc.

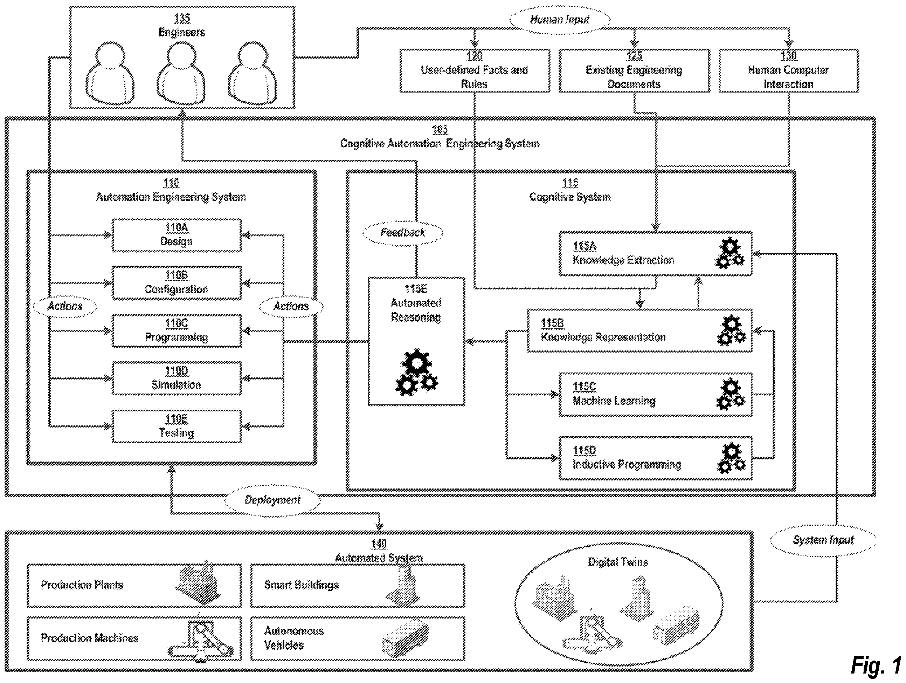

An additional distinction from existing cognitive systems is that such systems produce results that assist users in making decisions, i.e. they provide information and advice that is deduced by the system from previously acquired knowledge. This function is achieved by the CAES through the "Feedback" link discussed below (see FIG. 1). However, the CS system in the CAES also reasons about concrete engineering actions to carry out, and is able to execute these actions in the same way that a human engineer would do. For instance, the CS can determine that a given part of a required hardware configuration is missing, and being certain that this configuration needs to be added, it decides to carry out the corresponding engineering actions while alerting the human users that this is being done. Therefore, the CAES is a proactive agent instead of just a passive recommendation system, and it employs its own judgment system within its automated reasoning component in order to decide which actions to suggest to human engineers, and which actions to carry out on its own.

Moreover, because the CAES is applied to the engineering of technical systems that will operate in critical environments, the "room for errors" needs to be eliminated, or at least reduced to a minimum. The CAES needs to reason about the degree of certainty that it has for all knowledge that it manages, and for all results from its internal learning and reasoning tasks. This degree of certainty will allow the CAES to decide between a proactive action, a suggestion to the human engineers, a warning, or ignoring a fact that is highly uncertain. The CAES also needs to reason about the criticality of the engineering actions - e.g. changing a parameter, changing a control program, or changing a comment field have different criticalities, and this will also help the CAES to decide upon its actions.

FIG. 1 provides a system diagram 100 for implementing a CAES 105. Briefly, Engineers 135 provide inputs to a CAES 105 including user-defined facts and rules 120, existing engineering documents 125, and records of human-computer interaction 130. Based on these inputs, an Automated Reasoning (AR) Engine 115E in a Cognitive System 115 provides actions to an Automation engineering system 110. Based on these actions, the Automation Engineering System 110 creates a deployment for one or more Automated Systems 140. In addition to generation of the actions, the Automated Reasoning Engine 115E provides feedback to the Engineers 135 for further refinement of the inputs for future generation of deployments for the Automated Systems 140.

A Knowledge Extraction (KE) Component 115A in the Cognitive System 115 extracts relevant knowledge from the existing engineering documents 125 and the records of human-computer interaction 130 provided, directly or indirectly, by the Engineers 135. Examples of existing engineering documents 125 include function specifications, computer source code, and informal technical descriptions of components of the Automated System 140 (e.g., emails, engineering notes, etc.). The records of human-computer interaction 130 may include, for example, data logs from a human-machine interface (HMI) or devices within the Automated System 140 indicating how users are interacting with the device. It should be noted that the existing engineering documents 125 and the records of human-computer interaction 130 are meant to be exemplary of the type of the type of input data that can be used in various embodiments of the present invention. However, it should be understood that other types of input data can also be used.

The KE Component 115A performs context-sensitive knowledge extraction of the existing engineering documents 125 and the records of human-computer interaction 130. All this extracted knowledge is stored in the KR Component 115B. The KE Component 115A may use previously obtained knowledge from the KR Component 115B in order to perform context-sensitive knowledge extraction. For example, in one embodiment, the KE Component 115A comprises one or more machine learning models trained based on knowledge stored in the KR Component 115B. Such machine learning models may implement natural language processing algorithms, or other semantic extraction techniques to find knowledge within a large corpus of data.

The Knowledge Representation (KR) Component 115B stores knowledge extracted by the KE Component 115A as facts and rules that are encoded as data. Thus, as knowledge is extracted, the KE Component 115A applies a knowledge model to identify and encode the facts and rules. In some embodiments, the KR Component 115B may also receive User Defined Facts and Rules 120 which supplement those derived from the KE Component 115A.

The CS 115 learns from previous knowledge using a Machine Learning Component 115C and an Inductive Programming Component 115D. The Machine Learning Component 115C comprises one or more models which take extracted knowledge as an input and provide facts and rules as output. In one embodiment, the Machine Learning Component 115C comprises a deep learning model that applies artificial neural networks (ANNs) to process the extracted knowledge. The Inductive Programming Component 115D uses inductive learning techniques to automatically synthetize new rules for creating knowledge representations from the extracted knowledge and background knowledge of the particular automated system of interest. In some embodiments, the Inductive Programming Component 115D may compile a set of rules so that it may be evaluated directly by the AR Component 115E and the KE Component 115A. Thus, for example, the KR Component 115B can have highly customized rules that directly deduce new facts from input data. Inductive Programming techniques are generally known in the art and, thus, such techniques are not explained in detail herein.

Knowledge represented in the KR Component 115B may include, for example, the capabilities of a particular device, diagnostic knowledge, data layouts, and process-specific information on parameters, required functionalities, or process-specific analytical functionality. In some embodiments, the facts and rules are encoded as one or more knowledge models. These knowledge models may comprise ontologies expressed, for example, using the Web Ontology Language (OWL). In some embodiments, the knowledge models comprise a predictive model expressed using the Predictive Model Markup Language (PMML) standard and/or one or more rules expressed using the Rule Interchange Format (RIF) standard. Within the KR Component 115B, knowledge models may be connected syntactically via shared signature items, and semantically via assertions on the relation between elements of the different models (such as specialization/generalization, connectedness via relations, etc.).

The knowledge stored in the KR Component 115B is used by an Automated Reasoning (AR) Engine 115E in order to make decisions, derive solutions to problems and perform actions. The AR Engine 115E may be implemented, for example, as a rule engine, a deductive classifier, or a machine learning system. The AR Engine 115E can decide to perform engineering tasks on its own, analogously to what an engineer does. The AR Engine 115E assists may engineers by providing feedback to them while they are working with the CAES 105, for instance by issuing warnings, providing advice and suggestions, pinpointing errors in designs, programs and configurations, suggesting to replace work done by the engineer with improved versions, etc.

In some embodiments, the CAES 105 is used to deploy an automation solution to a physical system as with the case of an AES 110. Here, the KE Component 115A is able to obtain data from the physical system and produce additional knowledge for the KR Component 115B. This knowledge about the actual automated system is further employed by the CS 115 in order to improve its operation as a cyber-engineer, for example, by providing better advice for the engineer, by generating optimized designs, programs and configurations, by producing tailored test cases, etc.

As shown in FIG. 1, the AES 110 provides five components that relate to generation of a deployment. The Design Component 110A is used by the Engineers 135 to provide the initial design of the deployment (e.g. entities involved, requirements, etc.). The Configuration Component 110B is used to specify various system parameters, while the Programming Component 110C generates software for the system. The Simulation Component 110D simulates various activities associated with a deployment to ensure that it provides the desired behavior. Finally, the Testing Component, working in conjunction with the Simulation Component 110D, checks a deployment for errors before it is provided to the Automated System 140.

Note that the arrow between the AES 110 and the Automated System 140 is bidirectional; this is meant to show that after a deployment is made, changes to requirements of the Automated System 140 are transmitted back to the AES 110 so that they can be incorporated in future deployments. The CS 115 is used after the industrial automated system has been commissioned. For example, when new equipment is installed or replaced, engineers must re-program the system to enable the new functionality (see the "System Input" shown in FIG. 1). Using prior experience stored in the KE Component 115A, the CAES 105 is capable of reprogramming the system without human intervention but with their validation. The CAES 105 presents to the engineer a summary and the details of the reconfigured system, and deploy the new automation code after the engineer validates and approves the change.

The Automated System 140 may include any number of components to perform a set of operations defined by the Engineers 135. Additionally, it should be noted that the techniques described herein may be applied in various types of automated systems. For example, as shown in FIG. 1, the Automated System 140 may include systems such as production plants, smart buildings, individual production machines, and/or autonomous vehicles. Additionally, if digital twins exist for any particular system or subsystem, they may also be provided with deployment instructions or configuration information via the CAES 105. Furthermore, data such outputs of the Automated System 140, configuration information, data regarding the system's state may be used as input to the KE Component 115A in the Cognitive System 115, thus providing knowledge from real-world applications.

CAES can be employed in different system configurations that apply to specific application scenarios. For example, an engineering office may be equipped with one or more high-end PCs - referred to herein "engineering stations" - that run instances of the engineering system. The engineering stations can be used by engineers in isolation or in a local area network for collaborative engineering. In this scenario, every engineering station contains a CAES as shown in FIG. 1 above. If multiple instances of the CAES are in use, the systems can share their Knowledge Representation databases in order to maintain a "single source of truth", but the Automated Reasoning leading to "Feedback" and "Actions" occurs in each machine individually.

As an alternative to implementing the CAES across engineering stations, the CAES can be centrally hosted (e.g., in a cloud based computing environment) to allow use by multiple engineers at the same time. This architecture has the advantage of maintaining a single centralized repository for all engineering data and knowledge about the engineering process. The CAES reasons not only about the engineering tasks, but also about the assignment of tasks to engineers and itself, in order to avoid conflicts and to ensure a fluent engineering process.

To illustrate the applicability of CAES based in different system architectures, consider an example use case where image recognition is performed for hardware configuration. During automation engineering, a very important task is to design a hardware configuration of the automation elements (e.g., sensors, actuators, controllers, routers, firewalls, etc.). In conventional systems, the engineer uses schematics of the plant (e.g., piping and instrumentation diagrams) to create a hardware configuration that can be used to control the process. In the conventional practice, the relationship between the schematics of the plant and the hardware configuration of the automated system is implicit in the engineer's mind. Thus, depending on the engineer's expertise, the hardware configuration may be sub-optimal and does not fully capture the requirements. To improve this process, the CAES allows the engineers to provide also a photograph of the plan to be automated. The automated reasoning engine of the CAES extracts the components from the photograph and maps them to known components and hardware configurations acquired from other plants and stored in the knowledge representation. These mappings of photographs to components make an explicit connection between things that the engineer sees in real-life to hardware configuration objects. With this explicit understanding, the engineer can be aided by design recommendations from the CAES system to produce fewer errors in future deployments.

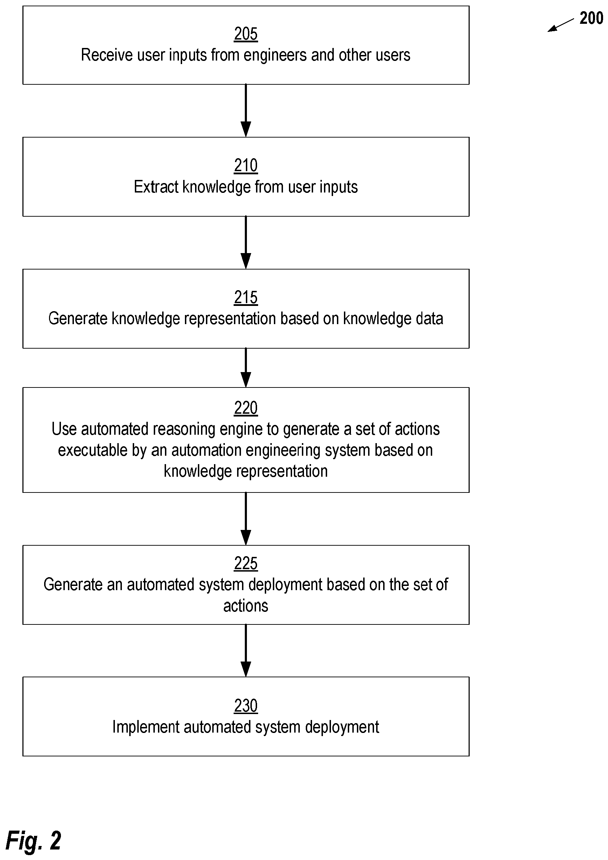

FIG. 2 provides a computer-implemented method 200 for generating a deployment for an automated system based on system knowledge. This method 200 may be implemented by a computing system comprising one or more computers. For example, in some embodiments, the method is implemented on a computer system comprising a cloud-based server computer allowing simultaneous access to a plurality of users.

Starting at step 205, the computer system receives user inputs from engineers or other users. These user inputs may include, for example, engineering documents and records of human-computer interactions. In one embodiment, the engineering documents comprise one or more of e-mails, manuals, and webpages. The computer system is configured to automatically retrieve the engineering documents from one or more databases. For example, the computer system includes "crawler" software that systematically browses databases storing engineering documents to extract either the documents themselves or, in some instances, just the knowledge. Software may be installed on the system hosting the database to automatically push documents to the computer system as they are created or updated. In some embodiments, the computer system monitors human-computer interactions with one or more computers in an automated system (e.g., human-machine interfaces) to generate the records of human-computer interactions.

At step 210, the computer system extracts knowledge data from the user inputs. In some embodiments, a natural language processing model is applied to the user inputs to extract the knowledge data. In other embodiments, the knowledge data is extracted from the user inputs based at least in part on a user's manual identification of at least a portion of the knowledge data.

Next, at step 215, the computing system generates a knowledge representation based at least in part of the knowledge data. This knowledge representation includes facts and rules related to the automated system. In some embodiments, the knowledge representation is generated by applying a deep learning to the knowledge data to generate the facts and rules related to the automated system. In other embodiments, the computer system generates the knowledge representation at least in part by applying an inductive programming model to generate one or more programs based on the knowledge data and generating executed code based on the one or more programs. Once generated, the executable code is used to generate the facts and rules related to the automated system. In one embodiment, the computer system receives pre-generated facts and rules related to the automated system. These pre-generated facts and rules can then be aggregated with the knowledge representation.

At step 220, the computer system uses an automated reasoning engine to generate a set of actions that are executable by an automation engineering system based on the knowledge representation. These actions are similar to the activity that could be performed by an engineer. However, by using knowledge gathered about the system, the automated reasoning can automate the performance of these tasks. As discussed above, the automated reasoning engine itself is a software tool capable of making decisions based on a large corpus of facts and rules defining the automated system. In some embodiments, the automated reasoning engine is a rules engine, implemented using techniques generally known in the art. In other embodiments, the automated reasoning engine is a machine learning model (e.g., a deep learning network) that is trained to output actions based on input comprising the derived facts and rules.

At step, 225, the computing system generates an automated system deployment based at least in part on the set of actions. The deployment itself can take various forms, depending on the particular type of automated system being used. In general, the deployment includes configuration information and possible instructions which can be implemented on components of the system. Techniques for generating a deployment by an Automation engineering System are generally known in the art and, thus, the specifics of these techniques are not explained in detail herein. Finally, at step 230, the automated system deployment is implemented on the automated system. For example, configuration information may be applied to the various components in the system and any instructions for individual components can be delivered to those components.

In some embodiments, the computer system uses the automated reasoning engine to generate a suggested modification to automated system design parameters. These suggested modifications can then be transmitted to engineers or other users that would have interest in such suggestions. In general, any method may be used to transmit the suggestions. For example, the suggestions are sent to the engineers as emails or postings on a webpage. The suggestions may be integrated into design tools to provide suggestions for certain design options as they are selected by the user. For example, if an engineer begins designing a particular component of a system, the engineer may be presented with a list of suggested configurations derived from knowledge of the automated system that will be using the component.

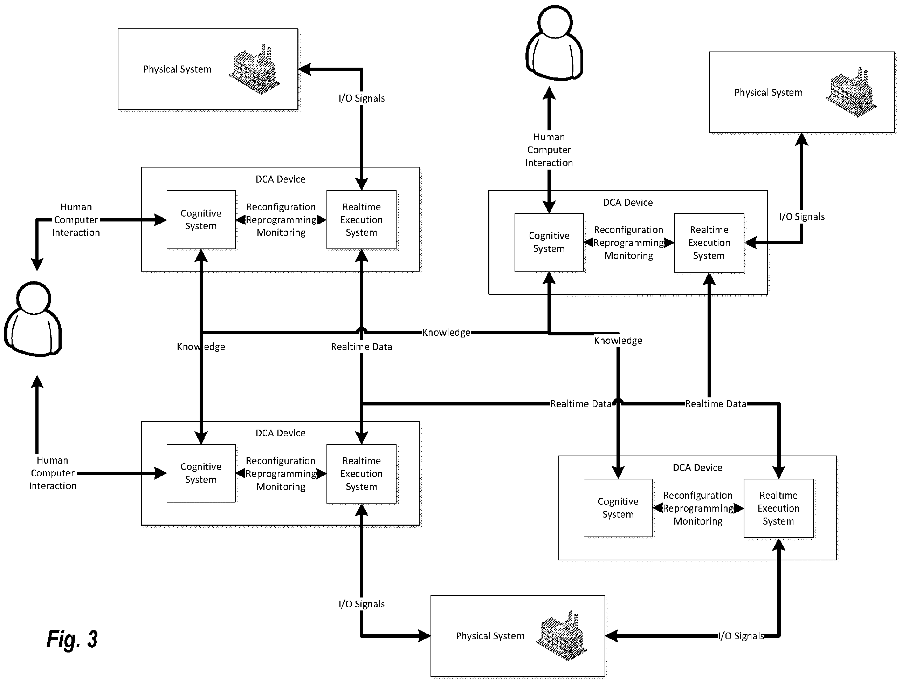

FIG. 3 provides an illustration of how the cognitive system of a CAES can be connected to other cognitive systems to form a distributed cognitive automation (DCA) system. This system facilitates that re-programmability of edge, Internet of Things (IoT), and automation control devices. In this example, the DCA system is formed by an interconnection of computing devices referred to herein as "DCA Devices" which include local cognitive systems. This system enables the integration of a non-real-time cognitive computing component in industrial automation, critical infrastructure and communication devices. Each component can learn from its environment and its users, reason about its operation, and adapt its own operation accordingly. The DCA system also facilitates the local reconfiguring and reprogramming of real-time tasks from the cognitive system, as well as the exchange of knowledge between cognitive system components using a common but generic knowledge representation format. Furthermore, the entire system is able to adapt to new situations and accomplish operation goals through distributed automated reasoning, thereby providing improved performance and increased resilience.

In the example of FIG. 3, 4 DCA Devices are shown; however, it should be understood that the DCA system can include any number of DCA Devices. Also, note that three physical systems are controlled by the DCA Devices shown in FIG. 3, but as with the number of DCA Devices, the number of DCA Devices that may be supported by the system is likewise scalable to any number supported by the amount of computing resources available.

Each DCA Device includes the cognitive system (see FIG. 1) to provide cognitive tasks such as knowledge acquisition, knowledge representation and management, machine learning, and automated reasoning. Records or other information regarding human-computer interactions are provided to the cognitive systems, as described above with respect to FIG. 2. Each DCA Device further includes a real-time execution system that performs time-critical tasks and general computational workloads.

Within every DCA Device, the cognitive system controls the operation of the real-time execution system. The cognitive system decides on the usage of the DCA Device and uses this information to reconfigure and reprogram the real-time execution system, thereby adapting to changing conditions in the environment and operation goals. The real-time execution system then operates in a deterministic manner thanks to the use of an underlying real-time scheduler and resource manager. The cognitive system is able to monitor the execution of the real-time system, for example, by observing runtime values of variables.

The cognitive systems of the multiple DCA Devices can communicate directly with each other by exchanging knowledge. This knowledge may be encoded in a standard but generic format (e.g., OWL or RDF), thereby allowing the representation of domain-specific knowledge for arbitrary domains. The cognitive systems learn from the exchanged knowledge and use this knowledge to reason about the operation of the DCA Device. Such information sharing is important to reduce the overhead of reprogramming when deploying new control systems. In short, the DCAs learn, share their knowledge with other DCAs, and adapt to changing conditions in the environment. As noted above, cognitive systems also offer a human-machine interface for interacting with engineers and operators. Through this interface, the users can provide information such as parameter values, operation goals, commands, operational constraints, priorities, etc. The cognitive system of each cognitive system imports this information into its knowledge representation and uses it as described above. The cognitive systems are also able to provide feedback to the users, for example, by explaining the reasoning behind their actions, providing suggestions, issuing warnings and alarms, and providing current runtime information.

As in the current state-of-the-art, the real-time runtime systems can communicate with each other directly through real-time communication networks, thereby exchanging streams of data at runtime. Real-time communication networks are an integral part of the state of the art in many kinds of critical infrastructure (e.g., industrial and building automation, transportation systems, automotive, avionics, etc.). These network architectures are, in most cases, adaptations of the common IT networks, further enhanced for real-time operation, high availability and functional safety. And as in the case of IT networks, they are not laid out for dynamic modification of the protocol layers.

Also, the real-time execution systems are able to interact with the physical world via input/output interfaces that transmit signals. These signals are used for monitoring the physical system through sensors, and for controlling the physical system via actuators. The general system architecture for DCA encompasses all possible topologies and system configurations that can benefit from the new approach. Making an analogy to living organisms: if a DCA Device is an organism, then the cognitive system of the cognitive system is its brain, which performs though processes and stores knowledge in its memory. The real-time execution system is its set of reflexes, which are actions that are carried out instantaneously in reaction to external stimulus, and without involving the brain. A major difference in this analogy is that, unlike living organisms, a DCA can use its "brain" to "program" its "reflexes".

The cognitive system in each DCA Device shares knowledge with other DCA Devices via an exclusive communication channel, and is then able to reason about the current situation that surrounds the device and the engineering tasks that need to be carried out. An important characteristic of this architecture is that the cognitive system in each DCA only handles the engineering of its corresponding automation device (real-time execution system), while general cognitive systems can handle the engineering of multiple devices. In this regard, the cognitive system may add true intelligence to each device and the system's operation relies on the distribution of knowledge among DCAs and on local reasoning and decision making at each DCA.

To illustrate the applicability of the DCA architecture, consider the example use case of dispersed reengineering at runtime for cyber resilience. At each DCA Device, the cognitive system has already produced and deployed an engineering configuration and program for the real-time execution system that controls the physical system. Now imagine that a cyber-attack compromises one of the DCA Devices. By exchanging knowledge, the DCA Devices can detect this situation and issue a proper reaction of the system. One possibility is that the cognitive system of the affected DCA can determine that it has been compromised and shares this knowledge with the other DCA. Another possibility is that the cognitive system of the second DCA can determine that the other DCA has been compromised based on the knowledge that it receives from it. In any case, the cognitive system of the second DCA can reason about the situation and determine that its DCA must overtake and assume the critical control functions of the compromised DCA. The cognitive system in the second DCA then determines the proper configuration and control program code that need to be added to its existing configuration, performs the necessary reconfiguration and reengineering actions, and activates the new configuration. After this, the second DCA can control the plant while substituting the compromised DCA.

Many robust control systems today offer functionality for failover between controllers. However, this use case highlights a new approach for solving this problem, namely by applying cognitive systems for detecting the security breach, reasoning about the problem, deciding on a solution, and executing the necessary steps to overcome the security violation. The fact that a cognitive system performs these steps means that the solution to the problem can be expected to improve as the cognitive system increases its knowledge through learning. Traditional failover systems are programmed in a fixed manner and cannot adapt to new situations or improve its solution approach.

As noted above, various computing devices generally known in the art may be used to implement the techniques described herein. For example, in some embodiments, one or more desktop computers can be used to implement the CAES and, for DCA scenarios, multiple desktop computers can be connected to perform the techniques described herein. Also for cloud-based implementations, server computing systems may be employed. Additionally, the CAES and DCA may be implemented on more specialized computing architectures such as those used in automation systems. For example, in some embodiments, the cognitive system can be implemented on Critical Infrastructure Devices (CIDs) such as programmable logic controllers (PLC), smart sensors, remote terminal units (RTU) and industrial switches. As is generally understood in the art, CIDs are used to monitor and control critical infrastructure such as micro-grids, water management and treatment, energy generation and transmission, manufacturing, buildings, and traffic. CIDs generally include a general-purpose or embedded processor, highspeed memory, and networking capabilities. Thus, for example, CIDs can be readily adapted to act as DCA Devices as shown in the distributed system illustrated in FIG. 3.

The computing devices described herein each include one or more processors that may include one or more central processing units (CPUs), graphical processing units (GPUs), or any other processor known in the art. More generally, a processor as used herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The various computing devices described herein may comprise at least one computer readable medium or memory for holding instructions programmed according to embodiments of the invention and for containing data structures, tables, records, or other data described herein. The term "computer readable medium" as used herein refers to any medium that participates in providing instructions to one or more processors for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks. Non-limiting examples of volatile media include dynamic memory. Non-limiting examples of transmission media include coaxial cables, copper wire, and fiber optics, including the wires that make up a system bus. Transmission media may also take the form of acoustic or light waves, such as those generated during radio wave and infrared data communications.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

The functions and process steps herein may be performed automatically, wholly or partially in response to user command. An activity (including a step) performed automatically is performed in response to one or more executable instructions or device operation without user direct initiation of the activity.

In the present application, the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

The system and processes of the figures are not exclusive. Other systems, processes and means may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof.

## Claims

1. A computer-implemented method (200), integrating cognitive processes into the management of physical automated systems, for generating a deployment for a physical automated system (140) based on system knowledge, the method comprising:
1.1 receiving (205) user inputs comprising engineering documents (125) and records of human-computer interactions (130);
1.2 extracting (210, 115A) knowledge data from the user inputs;
1.3 generating (215, 115B) a knowledge representation comprising facts and rules related to the physical automated system (140) based at least in part of the knowledge data;
1.4 using (220) an automated reasoning engine (115E) to generate a set of actions executable by an automation engineering system (110) based on the knowledge representation;
1.5 generating (225) a deployment of the automated system (140) based at least in part on the set of actions and implementing (230) the automated system deployment on the physical automated system (140); and
1.6 using the automated reasoning engine (115E) to generate and provide a feedback to a user (135) to enable refinement of the user inputs for future generation of deployment for the physical automated system (140);
1.7 wherein the engineering documents comprise one or more of e-mails, manuals, and webpages, and the method further comprises:
1.8 automatically retrieving the engineering documents from one or more databases; and
1.9 wherein the knowledge representation is generated by applying one or more machines learning models to the knowledge data to generate the facts and rules related to the automated system (140), and by applying an inductive programming model to generate one or more rules based on the knowledge data;
1.10 generating executable code based on the one or more rules; and
1.11 using the executable code to generate the facts and rules related to the automated system (140); wherein
1.12 after deployment is made, changes to requirements of the automated system (140) are transmitted back to the automation engineering system (110) and when new equipment is installed or replaced, the knowledge extraction component (115A) receives system input from the automated system (140) and the automation engineering system (110) reprograms the automated system (140) by deploying a new automation code after validation and approval by an engineer.

2. The method of claim 1, further comprising:
monitoring human-computer interactions with at least one human-machine interface in the automated system (140) to generate the records of human-computer interactions (130).

3. The method according to claim 1 or claim 2, further comprising:
applying a natural language processing model to the user inputs to extract the knowledge data.

4. The method according to anyone of claims 1 to 3, wherein the knowledge data is extracted from the user inputs based at least in part on a user's manual identification of at least a portion of the knowledge data.

5. The method according to anyone of claims 1 to 4, further comprising:
receiving pre-generated facts and rules related to the automated system (140); and
prior to using the automated reasoning engine (115E) to generate the set of actions,
aggregating the pre- generated facts and rules with the knowledge representation.

6. A system for generating a deployment for an automated system (140) based on system knowledge, the system comprising:
6.1 a cognitive system (105), comprising:
6.1.1 a user interface module (120) configured to receive (205) user inputs comprising engineering documents (125) and records of human-computer interactions (130),
6.1.2 a knowledge extraction component (115A) configured to extract 210) knowledge data from the user inputs,
6.1.3 a knowledge representation component (115B) configured to generate (215) a knowledge representation comprising facts and rules related to the automated system (140) based at least in part of the knowledge data, and
6.1.4 an automated reasoning engine (115E) configured to generate (220) a set of actions executable by an automation engineering system (110) based on the knowledge representation; and
6.2. the automation engineering system (110) configured to:
6.2.1 generate (225) a deployment of the automated system based at least in part on the set of actions, and
6.2.2 implement (230) the automated system deployment on the automated system (140),
6.3. the automated reasoning engine (115E) configured to generate and provide a feedback to a user (135) to enable refinement of the user inputs for future generation of deployment for the physical automated system;
6.4 wherein the engineering documents comprise one or more of e-mails, manuals, and webpages,
6.5 the system configured to automatically retrieve the engineering documents from one or more databases; and
6.6 wherein the knowledge representation is generated by the system by applying one or more machines learning models to the knowledge data to generate the facts and rules related to the automated system (140), and by applying an inductive programming model to generate one or more rules based on the knowledge data;
6.7 the system further configured to generate executable code based on the one or more rules; and
6.8 the system configured to use the executable code to generate the facts and rules related to the automated system (140); wherein
6.9. after deployment is made, changes to requirements of the automated system (140) are transmitted back to the automation engineering system (110) and when new equipment is installed or replaced, the knowledge extraction component 115A is adapted to receive system input from the automated system (140) and the automation engineering system (110) is adapted to reprogram the automated system by deploying a new automation code after validation and approval by an engineer,

7. The system of claim 6, further comprising:
a plurality of engineering stations, wherein each engineering station executes an instance of the cognitive system and an instance of the automation engineering system.

8. The system of claim 7, wherein each instance of the cognitive system shares the knowledge data locally extracted at the engineering station with instances of the cognitive system executed on other engineering systems.

9. The system of claim 6, further comprising:
a server computing system executes an instance of the cognitive system and an instance of the automation engineering system,
wherein the server computing system is configured to provide a plurality of users with simultaneous access to the cognitive system and the automation engineering system.

## Patentansprüche

1. Computerimplementiertes Verfahren (200), das kognitive Prozesse in die Verwaltung physischer automatisierter Systeme integriert, zum Erzeugen eines Einsatzes für ein physisches automatisiertes System (140) basierend auf Systemwissen, wobei das Verfahren umfasst:
1.1 Empfangen (205) von Benutzereingaben, die Engineeringdokumente (125) und Aufzeichnungen von Mensch-Computer-Interaktionen (130) umfassen;
1.2 Extrahieren (210, 115A) von Wissensdaten aus den Benutzereingaben;
1.3 Erzeugen (215, 115B) einer Wissensrepräsentation, die Fakten und Regeln in Bezug auf das physische automatisierte System (140) umfasst und zumindest teilweise auf den Wissensdaten basiert;
1.4 Verwenden (220) einer automatisierten "Reasoning Engine" (115E), um einen Satz von Aktionen zu erzeugen, die von einem Automatisierungsengineeringsystem (110) basierend auf der Wissensrepräsentation ausgeführt werden können;
1.5 Erzeugen (225) eines Einsatzes des automatisierten Systems (140) zumindest teilweise basierend auf dem Satz von Aktionen und Implementieren (230) des Einsatzes des automatisierten Systems auf dem physischen automatisierten System (140); und
1.6 Verwenden der automatisierten "Reasoning Engine" (115E), um eine Rückmeldung an einen Benutzer (135) zu erzeugen und bereitzustellen, um eine Verfeinerung der Benutzereingaben für die künftige Erzeugung eines Einsatzes für das physische automatisierte System (140) zu ermöglichen;
1.7 wobei die Engineeringdokumente eines oder mehrere von E-Mails, Handbüchern und Webseiten umfassen, und das Verfahren ferner umfasst:
1.8 automatisches Abrufen der Engineeringdokumente aus einer oder mehreren Datenbanken; und
1.9 wobei die Wissensrepräsentation durch Anwenden eines oder mehrerer maschineller Lernmodelle auf die Wissensdaten erzeugt wird, um die Fakten und Regeln in Bezug auf das automatisierte System (140) zu erzeugen, und durch Anwenden eines induktiven Programmiermodells, um eine oder mehrere Regeln basierend auf den Wissensdaten zu erzeugen;
1.10 Erzeugen von ausführbarem Code basierend auf der einen oder mehreren Regeln; und
1.11 Verwenden des ausführbaren Codes zum Erzeugen der Fakten und Regeln in Bezug auf das automatisierte System (140); wobei 1.12 nach dem Einsatz, Änderungen an den Anforderungen des automatisierten Systems (140) an das Automatisierungsengineeringsystem (110) zurückübertragen werden und wenn neue Ausrüstungen installiert oder ersetzt werden, empfängt die Wissensextraktionskomponente (115A) Systemeingaben vom automatisierten System (140) und das Automatisierungsengineeringsystem (110) programmiert das automatisierte System (140) neu, indem es einen neuen Automatisierungscode nach Validierung und Genehmigung durch einen Techniker einsetzt.

2. Verfahren nach Anspruch 1, ferner umfassend:
Überwachen der Mensch-Computer-Interaktionen mit mindestens einer Mensch-Maschine-Schnittstelle im automatisierten System (140), um die Aufzeichnungen der Mensch-Computer-Interaktionen (130) zu erzeugen.

3. Verfahren nach Anspruch 1 oder Anspruch 2, ferner umfassend:
Anwenden eines Modells zum Verarbeiten natürlicher Sprache auf die Benutzereingaben, um die Wissensdaten zu extrahieren.

4. Verfahren nach einem der Ansprüche 1 bis 3, wobei die Wissensdaten aus den Benutzereingaben zumindest teilweise basierend auf der manuellen Identifikation von zumindest einem Teil der Wissensdaten von dem Benutzer extrahiert werden.

5. Verfahren nach einem der Ansprüche 1 bis 4, ferner umfassend:
Empfangen von vorab erzeugten Fakten und Regeln, die sich auf das automatisierte System (140) beziehen; und vor dem Verwenden der automatisierten "Reasoning Engine" (115E), um den Satz von Aktionen zu erzeugen, Aggregieren der vorab erzeugten Fakten und Regeln mit der Wissensrepräsentation.

6. System zum Erzeugen eines Einsatzes für ein automatisiertes System (140) basierend auf Systemwissen, wobei das System umfasst:
6.1 ein kognitives System (105), umfassend:
6.1.1 ein Benutzerschnittstellenmodul (120), das dazu ausgelegt ist, Benutzereingaben zu empfangen (205), die Engineeringdokumente (125) und Aufzeichnungen von Mensch-Computer-Interaktionen (130) umfassen,
6.1.2 eine Wissensextraktionskomponente (115A), die dazu ausgelegt ist, (210) Wissensdaten aus den Benutzereingaben zu extrahieren,
6.1.3 eine Wissensrepräsentationskomponente (115B), die dazu ausgelegt ist, eine Wissensrepräsentation zu erzeugen (215), die Fakten und Regeln in Bezug auf das automatisierte System (140) zumindest teilweise basierend auf den Wissensdaten umfasst, und
6.1.4 eine automatisierte "Reasoning Engine" (115E), die dazu ausgelegt ist, einen Satz von Aktionen zu erzeugen (220), die von einem Automatisierungsengineeringsystem (110) basierend auf der Wissensrepräsentation ausgeführt werden können; und
6.2. das Automatisierungsengineeringsystem (110) dazu ausgelegt ist:
6.2.1 einen Einsatz des automatisierten Systems zu erzeugen (225), der zumindest teilweise auf dem Satz von Aktionen basiert, und
6.2.2 den automatisierten Systemeinsatz auf dem automatisierten System (140) zu implementieren (230),
6.3 die automatisierte "Reasoning Engine" (115E), die dazu ausgelegt ist, eine Rückmeldung an einen Benutzer (135) zu erzeugen und bereitzustellen, um eine Verfeinerung der Benutzereingaben für die zukünftige Erzeugung eines Einsatzes für das physische automatisierte System zu ermöglichen;
6.4 wobei die Engineeringdokumente eine oder mehrere von E-Mails, Handbüchern und Webseiten umfassen,
6.5 das System dazu ausgelegt ist, die Engineeringdokumente automatisch aus einer oder mehreren Datenbanken abzurufen; und
6.6 wobei die Wissensrepräsentation durch das System durch Anwenden eines oder mehrerer maschineller Lernmodelle auf die Wissensdaten erzeugt wird, um die Fakten und Regeln in Bezug auf das automatisierte System (140) zu erzeugen, und durch Anwenden eines induktiven Programmiermodells, um eine oder mehrere Regeln basierend auf den Wissensdaten zu erzeugen;
6.7 das System ferner dazu ausgelegt ist, ausführbaren Code basierend auf der einen oder mehreren Regeln zu erzeugen; und
6.8 das System dazu ausgelegt ist, den ausführbaren Code zu verwenden, um die Fakten und Regeln in Bezug auf das automatisierte System (140) zu erzeugen; wobei
6.9. nach dem Einsatz Änderungen an den Anforderungen des automatisierten Systems (140) an das Automatisierungsengineeringsystem (110) zurückübertragen werden und wenn neue Ausrüstungen installiert oder ersetzt werden, die Wissensextraktionskomponente 115A angepasst ist, um Systemeingaben vom automatisierten System (140) zu empfangen und das Automatisierungsengineeringsystem (110) angepasst ist, um das automatisierte System neu zu programmieren, indem ein neuer Automatisierungscode nach Validierung und Genehmigung durch einen Techniker eingesetzt wird,

7. System nach Anspruch 6, ferner umfassend:
mehrere Engineeringstationen, wobei jede Engineeringstation eine Instanz des kognitiven Systems und eine Instanz des Automatisierungsengineeringsystems ausführt.

8. System nach Anspruch 7, wobei jede Instanz des kognitiven Systems die lokal an der Engineeringstation extrahierten Wissensdaten mit Instanzen des kognitiven Systems teilt, die auf anderen Engineeringsystemen ausgeführt werden.

9. System nach Anspruch 6, ferner umfassend:
ein Server-Rechensystem führt eine Instanz des kognitiven Systems und eine Instanz des Automatisierungsengineeringsystems aus,
wobei das Server-Rechensystem dazu ausgelegt ist, mehreren Benutzern gleichzeitig Zugang zu dem kognitiven System und dem Automatisierungsengineeringsystem zu gewähren.

## Revendications

1. Procédé mis en œuvre par ordinateur (200), intégrant des processus cognitifs dans la gestion de systèmes automatisés physiques, permettant de générer un déploiement pour un système automatisé physique (140) basé sur une connaissance de système, le procédé comprenant les étapes suivantes :
1.1 recevoir (205) des entrées d'utilisateurs comprenant des documents d'ingénierie (125) et des enregistrements d'interactions humaines-informatiques (130) ;
1.2 extraire (210, 115A) des données de connaissance provenant des entrées d'utilisateurs ;
1.3 générer (215, 115B) une représentation de connaissance comprenant des faits et des règles liés au système automatisé physique (140) sur la base au moins en partie des données de connaissance ;
1.4 utiliser (220) un moteur de raisonnement automatisé (115E) pour générer un ensemble d'actions exécutables par un système d'ingénierie d'automatisation (110) sur la base de la représentation de connaissance ;
1.5 générer (225) un déploiement du système automatisé (140) sur la base au moins en partie de l'ensemble d'actions et mettre en œuvre (230) le déploiement du système automatisé sur le système automatisé physique (140) ; et
1.6 utiliser le moteur de raisonnement automatisé (115E) pour générer et fournir un retour à un utilisateur (135) afin de permettre un affinage des entrées d'utilisateurs pour une future génération de déploiement pour le système automatisé physique (140) ;
1.7 dans lequel les documents d'ingénierie comprennent un ou plusieurs éléments parmi des courriers électroniques, des manuels et des pages Web, et le procédé comprend en outre les étapes suivantes :
1.8 récupérer automatiquement des documents d'ingénierie à partir d'une ou plusieurs bases de données ; et
1.9 dans lequel la représentation de connaissance est générée en appliquant un ou plusieurs modèles d'apprentissage de machine aux données de connaissance pour générer les faits et les règles liés au système automatisé (140), et en appliquant un modèle de programmation inductif pour générer une ou plusieurs règles sur la base des données de connaissance ;
1.10 générer un code exécutable sur la base de l'une ou des plusieurs règles ; et
1.11 utiliser le code exécutable pour générer les faits et les règles liés au système automatisé (140) ; dans lequel
1.12 après l'exécution du déploiement, des changements par rapport aux exigences du système automatisé (140) sont transmises en retour au système d'ingénierie d'automatisation (110) et lorsqu'un nouvel équipement est installé ou remplacé, le composant d'extraction de connaissance (115A) reçoit une entrée de système provenant du système automatisé (140) et le système d'ingénierie d'automatisation (110) reprogramme le système automatisé (140) en déployant un nouveau code d'automatisation après validation et approbation par un ingénieur.

2. Procédé selon la revendication 1, comprenant en outre :
la surveillance d'interactions humaines-informatiques avec au moins une interface homme-machine dans le système automatisé (140) pour générer les enregistrements des interactions humaines-informatiques (130).

3. Procédé selon la revendication 1 ou la revendication 2, comprenant en outre :
l'application d'un modèle de traitement de langage naturel aux entrées d'utilisateurs pour extraire les données de connaissance.

4. Procédé selon l'une quelconque des revendications 1 à 3, dans lequel les données de connaissance sont extraites des entrées d'utilisateurs sur la base au moins en partie d'une identification d'un manuel d'utilisateur d'au moins une partie des données de connaissance.

5. Procédé selon l'une quelconque des revendications 1 à 4, comprenant en outre :
la réception de faits et de règles pré-générés liés au système automatisé (140) ; et
avant l'utilisation du moteur de raisonnement automatisé (115E) permettant de générer l'ensemble d'actions, agréger les faits et les règles pré-générés avec la représentation de connaissance.

6. Système permettant de générer un déploiement pour un système automatisé (140) sur la base d'une connaissance de système, le système comprenant :
6.1 un système cognitif (105), comprenant :
6.1.1 un module d'interface utilisateur (120) configuré pour recevoir (205) des entrées d'utilisateurs comprenant des documents d'ingénierie (125) et des enregistrements d'interactions humaines-informatiques (130),
6.1.2 un composant d'extraction de connaissance (115A) configuré pour extraire (210) des données de connaissance à partir des entrées d'utilisateurs,
6.1.3 un composant de représentation de connaissance (115B) configuré pour générer (215) une représentation de connaissance comprenant des faits et des règles liés au système automatisé (140) sur la base au moins en partie des données de connaissance, et
6.1.4 un moteur de raisonnement automatisé (115E) configuré pour générer (220) un ensemble d'actions exécutables par un système d'ingénierie d'automatisation (110) basé sur la représentation de connaissance ; et
6.2. le système d'ingénierie d'automatisation (110) est configuré pour :
6.2.1 générer (225) un déploiement du système automatisé sur la base au moins en partie de l'ensemble d'actions, et 6.2.2 mettre en œuvre (230) le déploiement du système automatisé sur le système automatisé (140),
6.3. le moteur de raisonnement automatisé (115E) est configuré pour générer et fournir un retour à un utilisateur (135) pour permettre l'affinage des entrées d'utilisateur pour une future génération de déploiement pour le système automatisé physique ;
6.4 dans lequel les documents d'ingénierie comprennent un ou plusieurs éléments parmi des courriers électroniques, des manuels et des pages Web,
6.5 le système est configuré pour récupérer automatiquement les documents d'ingénierie à partir d'une ou plusieurs bases de données ; et
6.6 dans lequel la représentation de connaissance est générée par le système en appliquant un ou plusieurs modèles d'apprentissage de machine aux données de connaissance pour générer les faits et les règles liés au système automatisé (140), et en appliquant un modèle de programmation inductif pour générer une ou plusieurs règles sur la base des données de connaissance ;
6.7 le système est configuré en outre pour générer un code exécutable sur la base de l'une ou des plusieurs règles ; et
6.8 le système est configuré pour utiliser le code exécutable pour générer les faits et les règles liés au système automatisé (140) ; dans lequel
6.9 après l'exécution du déploiement, des changements par rapport aux exigences du système automatisé (140) sont transmis en retour au système d'ingénierie d'automatisation (110) et lorsqu'un nouvel équipement est installé ou remplacé, le composant d'extraction de connaissance (115A) est adapté pour recevoir une entrée de système provenant du système automatisé (140) et le système d'ingénierie d'automatisation (110) est adapté pour reprogrammer le système automatisé en déployant un nouveau code d'automatisation après validation et approbation par un ingénieur.

7. Système selon la revendication 6, comprenant en outre :
une pluralité de stations d'ingénierie, chaque station d'ingénierie exécutant une instance du système cognitif et une instance du système d'ingénierie d'automatisation.

8. Système selon la revendication 7, dans lequel chaque instance du système cognitif partage les données de connaissance extraites localement au niveau de la station d'ingénierie avec des instances du système cognitif exécuté sur d'autres systèmes d'ingénierie.

9. Système selon la revendication 6, comprenant en outre :
un système informatique de serveur qui exécute une instance du système cognitif et une instance du système d'ingénierie d'automatisation,
dans lequel le système informatique de serveur est configuré pour fournir à une pluralité d'utilisateurs un accès simultané au système cognitif et au système d'ingénierie d'automatisation.
